(19) Europäisches Patentamt
European Patent Office
Office européen des brevets

(11) **EP 1 730 879 B1**

(12) **EUROPEAN PATENT SPECIFICATION**

(45) Date of publication and mention of the grant of the patent:
**25.01.2012 Bulletin 2012/04**

(51) Int Cl.:
***H04L 9/08*** (2006.01)

(21) Application number: **05708730.6**

(22) Date of filing: **11.03.2005**

(86) International application number:
**PCT/IB2005/000639**

(87) International publication number:
**WO 2005/091548 (29.09.2005 Gazette 2005/39)**

(54) **METHOD AND DEVICE FOR SYNCHRONIZING AND ACQUIRING TWIN PHOTONS FOR A QUANTUM CRYPTOGRAPHY PROCESS**

VERFAHREN UND EINRICHTUNG ZUM SYNCHRONISIEREN UND BESCHAFFEN VON ZWILLINGSPHOTONEN FÜR EINEN QUANTEN-KRYPTOGRAPHIEPROZESS

PROCEDE ET DISPOSITIF DE SYNCHRONISATION ET DE DETECTION DE PHOTONS JUMEAUX POUR UN PROCESSUS DE CRYPTOGRAPHIE QUANTIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **12.03.2004 IT TO20040165**

(43) Date of publication of application:
**13.12.2006 Bulletin 2006/50**

(73) Proprietor: **Selex Sistemi Integrati S.p.A.
Roma (IT)**

(72) Inventors:
• **BOVINO, Fabio, Antonio
16132 Genova (IT)**
• **VARISCO, Pietro
I-90127 Palermo (IT)**

• **DE NICOLO, Paolo
I-16148 Genova (IT)**

(74) Representative: **Jorio, Paolo et al
Studio Torta S.p.A.
Via Viotti, 9
10121 Torino (IT)**

(56) References cited:
**US-A1- 2002 191 176     US-B1- 6 424 665**

• **BOVINO F A ET AL: "Demonstration of secure quantum key distribution" PROCEEDINGS OF THE SPIE - THE INTERNATIONAL SOCIETY FOR OPTICAL ENGINEERING SPIE-INT. SOC. OPT. ENG USA, vol. 5105, 2003, pages 1-10, XP002337235 ISSN: 0277-786X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method of synchronizing and acquiring twin photons for a quantum cryptography process.

The present invention also relates to a device for synchronizing and acquiring twin photons, which may be used in a quantum cryptography system.

BACKGROUND ART

As is known, quantum cryptography employs quantum physics principles to generate, transmit, and decode information at an extremely high security level.

An example of these processes is disclosed in BOVINO F A ET AL: "Demonstration of secure quantum key distribution' PROCEEDINGS OF THE SPIE - THE INTERNATIONAL SOCIETY FOR OPTICAL ENGINEERING SPIE-INT. SOC. OPT. ENG USA, vol. 5105,2003, pages 1-10, XP002337235 ISSN: 0277-786X.

Such processes are based on a number of steps, which include:

a) Creating a pair of entangled photons. This is done by exciting a birefringent linear (e.g. barium beta borate) crystal using a laser beam (in particular a pulsating laser beam) to create a pair of photons of the same frequency and opposite (vertical/horizontal) polarization.

b) Rough quantum transmission. The pairs of photons generated are transmitted over respective strictly private transmission channels (e.g. optical fibres or vacuum) to a first and second user.

c) Random acquisition. Each user compares the single received photon with a first reference base (base A) and a second reference base (base B). Each reference base comprises two perpendicular axes, and the two bases are spaced angularly apart by a predetermined angle (e.g. 45°). Since polarization of the acquired photon may or may not be parallel to an axis of the base, the comparison gives a binary result (0, 1).

d) Public discussion. Over a public channel, the two users compare the type of base (base A, base B) used to make the comparison, but without exchanging the results of the comparison between the photon and the base. When the bases used for the comparison match, the results of the comparison by the two users are comparable. The results of the comparison made by the two users relative to the same pair of photons but with difference bases (bases A, B and B, A respectively) are therefore discarded to reduce the data set and form a set of "sifted" data relating solely to the results of the comparison made of the same pair of photons with the same base. Because of the quantum principle referred to above (each pair of photons has opposite polarizations), each result (0, 1) acquired by a first user must correspond to an opposite result (1, 0) acquired by the second user with the same base. Consequently, the sifted data acquired by the first user must be opposite (in the binary sense) to the data acquired by the second user.

e) Espionage test. The two users exchange subsets of sifted data over the public channel to ensure the data is actually correlated as described above. If it is, absolute security of the received data is acknowledged. If it is not, possible espionage of data transmission over the strictly private channel is indicated. Any attempt, in fact, to measure and/or copy data transmitted over the strictly private channel affects the polarization (vertical/horizontal) relationship of the pair, thus providing users with a clear espionage alert. Because of the impossibility of cloning or extracting quantum state information, quantum cryptography provides for generating a practically maximum-security user key.

f) Error correction. Both users assess the security of their code keys by making a parity check of certain subsets of sifted data over the public channel. For security reasons, this is done using very limited sets of data.

In laboratory tests of quantum cryptography systems, the photons in the pair are acquired by coincidence, i.e. when a first user detects the arrival of a first photon in the pair, a time window is opened in which the second user awaits the arrival of the second photon in the pair. Since testing allows for controlling the photon paths and propagation of the electric signals between users, synchronization problems are solved easily.

In actual use, however, the transmission channels over which the individual photons in the pair are transmitted are much longer (may even be many kilometres in length) so that the photons in the pair reach the first and second user at widely differing instants, on account of the transmission delays introduced by each communication channel.

In which case, coincidence-based photon pair acquisition, as in laboratory tests, is unthinkable.

DISCLOSURE OF INVENTION

It is an object of the present invention to provide a synchronization method for a quantum cryptography process, which may be implemented and used to advantage in currently operating synchronization systems.

According to the present invention, there is provided a method of synchronizing and acquiring twin photons for a quantum cryptography process comprising the steps of: generating pairs of entangled photons, in which the photons in each pair are of opposite polarization; supplying a first photon in the pair to a first communication channel to a first receiving station having a first clock generating a time reference for the first receiving station; supplying a second photon in the pair to a second communication channel to a second receiving station having a second clock generating a time reference for the second receiving station; comparing, at each receiving station, the polarization of each received photon with a randomly selected first reference base or second reference base, each reference base comprising two perpendicular axes, and the first and second reference base being spaced angularly apart by a given angle; generating a synchronizing signal to activate the first clock and the second clock; and searching for pairs of twin photons received at the two receiving stations substantially at the same instant measured on the basis of information provided by the respective clocks; characterized in that the step of searching for pairs of twin photons comprises the steps of : measuring, at each receiving station, the time difference AT between the acquisition instant $t_n$ of one photon and the acquisition instant $t_{n-1}$ of the preceding received photon : $\Delta T = t_n - t_{n-1}$; recognizing a pair of twin photons when the time difference $\Delta T_a$ measured at a first receiving station and the corresponding time difference $\Delta T_b$ measured at a second receiving station substantially coincide, and in particular when the absolute value of the difference between $\Delta T_a$ and $\Delta T_b$ is less than a coincidence time window : $|\Delta T_a - \Delta T_b| < w$; and repeating the measuring and recognition steps.

The present invention also relates to a device for synchronizing and acquiring twin photons for a quantum cryptography process comprising: a photon source for generating pairs of entangled photons of opposite polarization; a first communication channel for transmitting a first photon in the pair; a second communication channel for transmitting a second photon in the pair; a first receiving station for receiving the photons from the first communication channel; and a second receiving station for receiving the photons from the second communication channel; said first and said second receiving station having a first and a second clock respectively for generating respective time references for the receiving stations; each receiving station comprising reference means for comparing the polarization of each received photon with a randomly selected first reference base or second reference base; each reference base comprising two perpendicular axes, and the first and second reference base being spaced angularly apart by a given angle; said first and said second receiving station receiving a synchronizing signal for activating the first clock and the second clock; and each receiving station having search means to search for pairs of twin photons received at the two receiving stations substantially at the same instant measured on the basis of information provided by the respective clocks; characterized in that said search means comprise : comparing means for measuring, at each receiving station, the time difference $\Delta T$ between the acquisition instant $t_n$ of one photon and the acquisition instant $t_{n-1}$ of the preceding received photon : $\Delta T = t_n - t_{n-1}$; detecting means for recognizing a pair of twin photons when the time difference $\Delta T_a$ measured at a first receiving station and the corresponding time difference $\Delta T_b$ measured at a second receiving station substantially coincide, and in particular when the absolute value of the difference between $\Delta T_a$ and $\Delta T_b$ is less than a coincidence time window : $|\Delta T_a - \Delta T_b| < w$; and reselecting means for reselecting said comparing means and said detecting means and repeating the measuring and recognition operations.

## BRIEF DESCRIPTION OF THE DRAWINGS

The invention will now be described with particular reference to the accompanying drawing, in which:

Figure 1 shows, schematically, a quantum cryptography system implementing the method according to the present invention;
Figure 2 shows a block diagram of the method according to the present invention;
Figure 3 shows test data obtained according to the present invention.

## BEST MODE FOR CARRYING OUT THE INVENTION

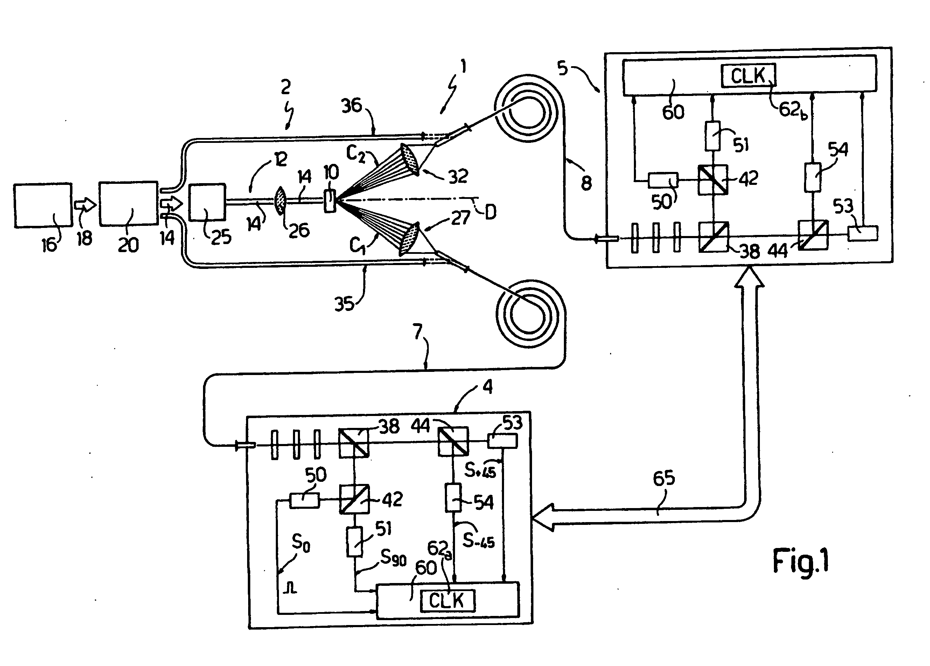

Number 1 in Figure 1 indicates as a whole a quantum cryptography system comprising an entangled-photon source 2, and a first and second receiving station 4, 5 communicating with source 2 over respective strictly private (optical fibre) communication channels 7, 8.

More specifically, source 2 comprises a parallelepiped-shaped birefringent non-linear crystal 10 (in particular a barium beta borate crystal) of constant thickness L. Crystal 10 is connected on a first side to a laser beam source 12 for generating an excitation laser beam (pump beam) 14 to excite crystal 10 and generate pairs of polarization-entangled photons.

More specifically, laser beam source 12 comprises a known first power laser 16, which generates a laser beam 18 to a second laser 20, which, in response, emits pump laser beam 14 in a straight direction D forming a given angle with the optical axis of crystal 10.

Second laser 20 is connected to a known frequency converting device 25, and to an input focusing system 26 (shown schematically by a lens located along D between second laser 20 and crystal 10) for narrowing the laser beam so that pump laser beam 14 has a predetermined beam waist $r_p$ inside crystal 10.

As is known, the photons emitted travel in space along paths lying in a first and second conical region having vertices tangent to the crystal and axes symmetrical with respect to the pump beam. The photon paths may be represented in a plane perpendicular to the pump beam by a first and second annulus, which represent the most likely locations of the trajectories of a first and second photon in the pair respectively. The likelihood of a photon being located inwards of the annuli is poor, though less than zero.

More specifically, the photons generated by interaction of pump laser beam 14 and crystal 10 travel from a second side of crystal 10 along paths lying in a first conical region $C_1$ and a second conical region $C_2$, which are symmetrical with respect to propagation direction D, are located on opposite sides of direction D, and correspond to the intersection portion of the annuli.

Source 2 comprises a first output focusing system 27 spaced a distance from direction D on the second side of crystal 10, and which focuses the photons from region $C_1$ into a focusing region corresponding to the input of a first optical fibre forming first communication channel 7.

Source 2 also comprises a second output focusing system 32 spaced a distance from direction D on the second side of crystal 10, and which focuses the photons from region $C_2$ into a focusing region corresponding to the input of a second optical fibre forming second communication channel 8.

Optical fibres 7, 8 extend from source 2 to respective stations 4, 5 along different paths, so that optical fibres 7 and 8 are of different lengths.

According to system 1, the laser beam produced by laser 20 may also be supplied directly, at predetermined instants, to each optical fibre 7, 8, as shown by optical fibre portions 35, 36, which, by means of a beam splitter B (not shown), pick up respective parts of the beam from laser 20 and focus them at the inputs of optical fibres 7, 8. Beam splitter B may be inserted/excluded selectively along/from the path of the outgoing laser beam to feed the laser beam to optical fibre portions 35, 36 at predetermined instants.

Each receiving station 4,5 comprises a first beam splitter 38 receiving the photons from optical fibre 7, 8, and supplying a second beam splitter 42 and a third beam splitter 44.

Beam splitter 38 supplies 50% of the incoming photons to second beam splitter 42, and the other 50% to third beam splitter 44.

Second beam splitter 42 cooperates with a first photon detector 50 and a second photon detector 51, preferably defined by known avalanche detectors.

Third beam splitter 44 cooperates with a third photon detector 53 and a fourth photon detector 54, preferably defined by known avalanche detectors.

Second beam splitter 42 (PBS - polarized beam splitter type) feeds the incoming photons to first photon detector 50 or second photon detector 51, depending on their polarization.

Third beam splitter 44 (PBS - polarized beam splitter type) feeds the incoming photons to third photon detector 53 or fourth photon detector 54, depending on their polarization.

More specifically, first photon detector 50 assumes a high output state $S_0$ (detector trip) for a given time on detecting a photon with a polarization axis parallel to a reference axis inclined at a 0° angle with respect to a reference axis; and second photon detector 51 assumes a high output state $S_{90}$ for a given time in the presence of photons with polarization axis parallel to a reference axis inclined at a 90° angle with respect to a reference axis.

Third photon detector 53 generates a first high logic state $S_{45}$ for a given time on detecting a photon with a polarization axis parallel to a reference axis inclined at a +45° angle with respect to the reference; and fourth photon detector 54 generates a high logic state $S_{-45}$ for a given time on detecting a photon with a polarization axis parallel to an axis inclined at a -45° angle with respect to the reference.

The output signals from detectors 50, 51, 53, 54 are supplied to an electronic processing unit 60 comprising, among other things, a clock 62a, 62b for producing a time reference for station 4, 5.

Each incoming photon therefore has the same probability of being directed to beam splitter 42 or 44, and therefore to detectors 50, 51 or detectors 53, 54.

Each photon is directed by beam splitter 42 or 44 to detectors 50, 51 or detectors 53, 54 on the basis of its polarization.

Receiving station 4 compares the polarization of each received photon with a randomly selected first reference base (base A - detectors 50 and 51) or second reference base (base B - detectors 53 and 54). Each reference base comprises two perpendicular axes (0°,90° and +45°,-45° respectively), and the two bases are spaced angularly 45° apart.

Since the polarization of the photon may/may not be parallel to an axis of the base, the result of the comparison is binary.

Detectors 50, 51, 53, 54 therefore supply electronic unit 60 with information concerning the base used for the comparison (the base associated with the two detectors 50, 51 or 53, 54 receiving a photon), and with information concerning the outcome of the comparison; both of which are used in known manner for a quantum cryptography process by which stations 4 and 5 communicate over a public information channel 65.

A synchronizing signal may also be produced by supplying optical fibres 7, 8, e.g. for a given time (e.g. roughly a few picoseconds) with a known (e.g. horizontal) polarization laser beam, so that a large number of photons reach stations 4 and 5. In which case, all (or at least three) of detectors 50, 51, 53, 54 are most likely to receive at least one photon whose polarization coincides with that of its reference axis, thus tripping the detectors. Reception of the synchronizing signal is therefore detected when all (or at least three) of detectors 50, 51, 53, 54 trip simultaneously.

Upon reception of the synchronizing signal, the respective clock 62a, 62b is activated (instant To).

Given the different transmission delays of optical fibres 7, 8, the synchronizing signal arrives at different instants at stations 4 and 5, so clocks 62a, 62b of stations 4 and 5 are activated at different synchronization instants To. The same delays are applied to transmission of the individual photons.

As of synchronization instant To (which acts as a reference and activates clocks 62a, 62b), a search is made for pairs of "twin" photons, i.e. photons received at the two stations 4, 5 at substantially the same instant with respect to To, and which are used for extracting the quantum key.

Theoretically, "twin" photons may be detected using an absolute time comparison criterion referred to synchronization instant To, i.e. when the difference between the arrival instants $t_a$ and $t_b$ (both calculated with respect to synchronization instant To) of two photons at different stations 4, 5 coincides (or is below a threshold, e.g. two nanoseconds, or so-called coincidence time window), then the two photons are acknowledged as "twins".

The above criterion would be valid if both clocks 62a, 62b had exactly the same frequency.

In actual fact, for obvious, inevitable physical reasons (component and temperature differences), the oscillation frequencies of the two clocks 62a, 62b can never be exactly the same, thus limiting the period in which "twin" photon pairs can be acquired using the above theoretical criterion.

In fact, if $t_n$ is the absolute arrival time (i.e. calculated with respect to To) of the n-th pair of photons, $(1+\alpha)t_n$ the arrival time measured at station 4 on the basis of clock 62a, and $(1+\beta)t_n$ the arrival time measured at station 5 on the basis of clock 62b, parameters $\alpha$ and $\beta$ take into account the extent to which the frequency of clock 62a, 62b differs from nominal frequency.

Using the absolute time comparison criterion, coincidence is determined whenever the following condition applies:

$$|(1+\alpha) - (1+\beta)| \, t_n < w \qquad (1)$$

where w represents the coincidence time window.

Given the difference in frequency of the two clocks 62a, 62b, however, the above condition (1) applies when:

$$t_n < w/|(\alpha - \beta)| \qquad (2)$$

That is, a maximum acquisition time $t_n$ exists, over and above which the absolute time comparison method fails, and which tests conducted by the Applicant have shown to be extremely low (less than a fraction of a second). In other words, twin photon pair recognition terminates after only a few fractions of a second.

The present invention employs a different twin photon acquisition method designed to solve the above major technical problem.

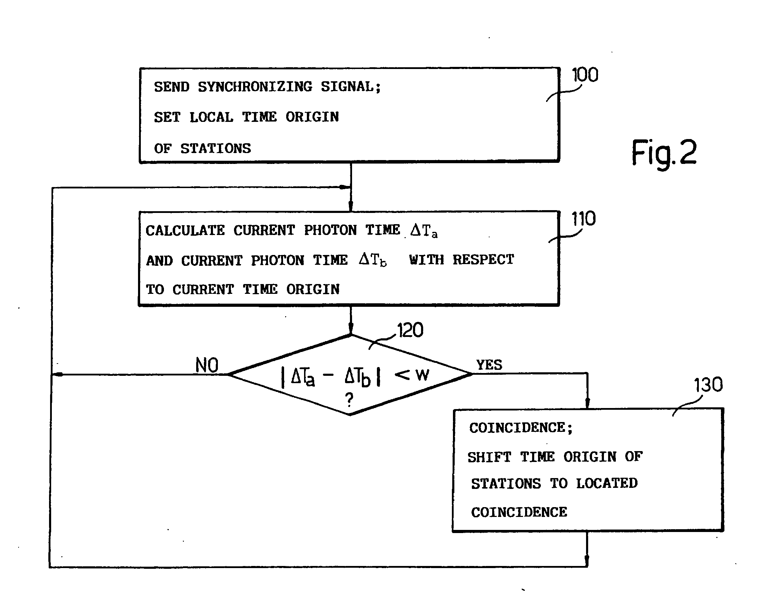

The method according to the present invention is shown in Figure 2.

First (block 100), a synchronizing signal is generated by supplying the laser beam from source 20 directly to optical fibres 7, 8. The synchronizing beam is received by stations 4 and 5, where the incoming synchronizing signal trips detectors 50, 51, 53, 54 (or at least three of them), and starts clocks 62a, 62b; which instant marks the local time origin of stations 4 and 5.

The next block (block 110) calculates the relative time $\Delta T_a$ of the photon acquired at a first station (e.g. station 4) with respect to the local time origin, and the relative time $\Delta T_b$ of the photon acquired at a second station (e.g. station 5) with respect to the local time origin.

The next block (block 120) recognizes a pair of twin photons when the time difference $\Delta T_a$ measured at a first station (e.g. station 4) and the corresponding time difference $\Delta T_b$ measured at a second station (e.g. station 5) substantially coincide, i.e. when the absolute value of the difference between $\Delta T_a$ and $\Delta T_b$ is below the coincidence time window:

$$|\Delta T_a - \Delta T_b| < w \quad (4)$$

If this is so, the local time origin of both stations is shifted to the coincidence instant determined (block 130); otherwise, data scanning continues.

Whichever the case, both blocks 120 and 130 return to block 110 to repeat the above operations and search for other pairs of twin photons.

In other words, the time difference AT between the acquisition instant $t_n$ of one photon and the acquisition instant $t_{n-1}$ of the previously received photon in a pair : AT = $t_n - t_{n-1}$, is measured (block 110) at each station 4, 5, and a pair of twin photons is recognized when the relative time $\Delta T_a$ measured at a first station (4) and the corresponding relative time $\Delta T_b$ measured at a second station (5) substantially coincide (block 120).

The above measuring and recognition operations are then repeated.

The synchronizing method according to the present invention solves the technical problem referred to previously by enabling acquisition time to be prolonged indefinitely.

That is, given equation (1), in the light of the above description with reference to the Figure 2 block diagram :

$$|(1+\alpha) - (1+\beta)| \; (t_n - t_{n-1}) < w \quad (5)$$

In which case, if $\Delta T = t_n - t_{n-1}$, equation (5) gives:

$$\Delta T < w / (\alpha - \beta) \quad (6)$$

Therefore, providing the data arrives at a frequency

$$\nu = 1/\Delta T = (\alpha - \beta) / w \quad (7)$$

the acquisition time of clocks 62a, 62b may be prolonged indefinitely.

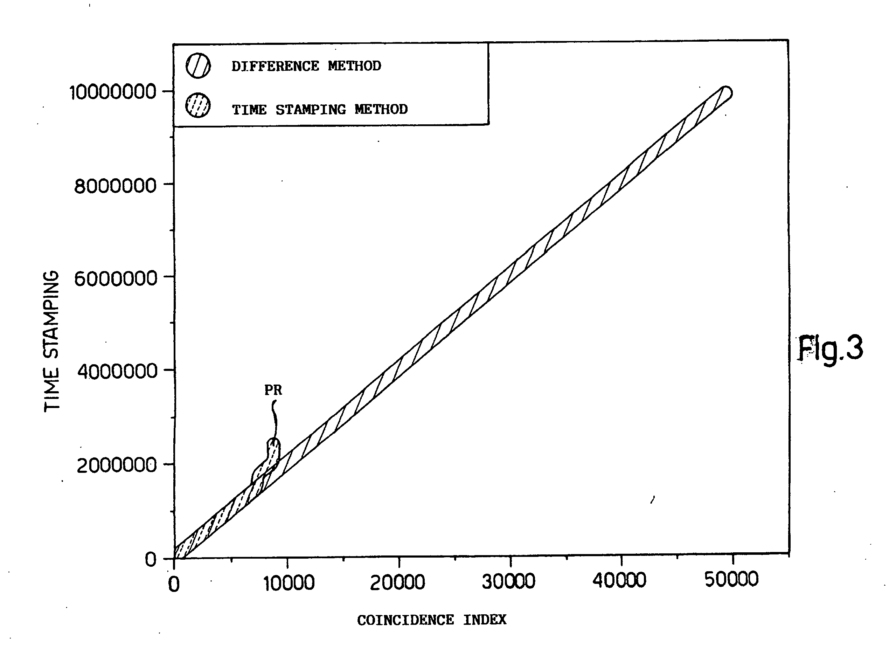

Figure 3 shows a test result graph, in which the x axis shows the resulting coincidence index (i.e. the number of twin photons extracted), and the y axis the time value of one of clocks 62a, 62b. The densely hatched curve indicates the result of the absolute comparison method, which breaks off sharply at a break point PR; whereas the lightly hatched curve shows the result of the method described with reference to Figure 2, and which, as can be seen, has no break point.

By means of software, the method according to the present invention solves the problem posed by the difference in oscillation frequency (de-phasing) of the two clocks 62a, 62b; the method is extremely "robust" and independent of the oscillation frequency of the clocks (which, as is known, tends to vary with time); and deviation of clocks 62a, 62b with respect to rated performance need not be known beforehand, so that no preliminary calibration of clocks 62a, 62b is required.

Should the photon source generate photons with a frequency other than that in equation (7), pairs of twin photons could not be recognized. This problem is solved beforehand by superimposing on the parametric fluorescence signal an easily recognizable known additional signal, e.g. a classic pulse train, to increase the total frequency of the signal received by first and second station 4, 5 and so still satisfy equation (7). The additional signal is later recognized and eliminated. Using a classic pulse train, i.e. with a very large number of photons, the additional signal is recognized when the four photodetectors trip.

## Claims

1. A method of synchronizing and acquiring twin photons for a quantum cryptography process, comprising the steps of:

   - generating pairs of entangled photons, in which the photons in each pair are of opposite polarization;
   - supplying a first photon in the pair via a first communication channel (7) to a first receiving station (4) having a first clock (62a) generating a time reference for the first receiving station;

- supplying a second photon in the pair via a second communication channel (8) to a second receiving station (5) having a second clock (62b) generating a time reference for the second receiving station;
- comparing, at each receiving station, the polarization of each received photon with a randomly selected first reference base or second reference base; each reference base comprising two perpendicular axes, and the first and second reference bases being spaced angularly apart by a given angle;
- generating a synchronizing signal to activate the first clock and the second clock; and
- searching for pairs of twin photons received at the two receiving stations (4, 5) at the same instant measured on the basis of information provided by the respective clocks;
**characterized in that** the step of searching for pairs of twin photons comprises the steps of :
- measuring, at each receiving station (4, 5), the time difference $\Delta T$ between the acquisition instant $t_n$ of one photon and the acquisition instant $t_{n-1}$ of the preceding received photon :

$$\Delta T = t_n - t_{n-1};$$

- recognizing a pair of twin photons when the absolute value of the difference between the time difference $\Delta T_a$ measured at a first receiving station (4) and the corresponding time difference $\Delta T_b$ measured at a second receiving station (5)
is less than a coincidence time window : $|\Delta T_a - \Delta T| < w$: and
- repeating the measuring and recognition steps.

2. A method as claimed in Claim 1, wherein the photons are generated with a frequency v of $(\alpha - \beta)/w$ or higher, where $\alpha$ and $\beta$ are parameters which take into account the extent to which the frequency of the first/second clock deviates from the nominal frequency, and w represents the coincidence time window.

3. A method as claimed in Claim 1, wherein the step of generating a synchronizing signal comprises the steps of:

- supplying an optical synchronizing beam to the inputs of the first and second communication channel;
- determining reception of the optical synchronizing beam at the first and second receiving station; and
- synchronizing the respective clock at each receiving station upon reception of said optical synchronizing beam.

4. A method as claimed in Claim 3, wherein said comparing step is performed by supplying the received photons, with the same probability, to a first pair of detectors (50, 51) associated with the first reference base, or to a second pair of detectors (53, 54) associated with the second reference base; each detector in the pair being associated with a respective reference axis perpendicular to the other reference axis; each detector triggering when the photon received by it assumes a predetermined relationship and said measuring step comprising the step of determining tripping of both the detectors of a receiving station upon reception of said optical synchronizing beam.

5. A method as claimed in Claim 1, and comprising the steps of supplying over both communication channels recognizable known additional signal to increase the total frequency of the signal received by the first and second receiving station (4, 5); and recognizing and eliminating the additional signal at said receiving stations (4, 5).

6. A device for synchronizing and acquiring twin photons for a quantum cryptography process comprising:

- a photon source (2) for generating pairs of entangled photons of opposite polarization;
- a first communication channel (7) for transmitting a first photon in the pair;
- a second communication channel (8) for transmitting a second photon in the pair;
- a first receiving station (4) for receiving the photons from the first communication channel (7); and
- a second receiving station (5) for receiving the photons from the second communication channel (8);
said first and said second receiving station having a first and a second clock (62a, 62b) respectively for generating respective time references for the receiving stations;
each receiving station comprising reference means for comparing the polarization of each received photon with a randomly selected first reference base or second reference base; each reference base comprising two perpendicular axes, and the first and second reference base being spaced angularly apart by a given angle;
said first and said second receiving station receiving a synchronizing signal for activating the first clock and the second clock;
and each receiving station having search means to search for pairs of twin photons received at the two receiving stations (4, 5) at the same instant measured on the basis of information provided by the respective clocks;
**characterized in that** said search means comprise :
- comparing means (110) for measuring, at each receiving station (4, 5), the time difference $\Delta T$ between the acquisition instant $t_n$ of one photon and the acquisition instant $t_{n-1}$ of the preceding received photon

$$\Delta T = t_n - t_{n-1};$$

- detecting means (120) for recognizing a pair of
twin photons when the absolute value of the difference between the time difference $\Delta T_a$ measured at a first receiving station (4) and the corresponding time difference $\Delta T_b$ measured at a second receiving station (5) is less than a coincidence time window : $|\Delta T_a - \Delta T_b| < w$; and
- reselecting means (120) for reselecting said comparing means and said detecting means and repeating the measuring and recognition operations.

**Patentansprüche**

1.  Ein Verfahren zum Synchronisieren und Akquirieren von Zwillingsphotonen für einen Quantenkryptografieprozess, wobei das Verfahren folgende Schritte aufweist:

    Erzeugen von Paaren von verschränkten Photonen, in dem die Photonen in jedem Paar eine gegensätzliche Polarisation aufweisen;
    Liefern eines ersten Photons aus dem Paar über einen ersten Kommunikationskanal (7) an eine erste Empfangsstation (4) mit einer ersten Uhr, beziehungsweise eines Taktgebers (62a), die/der eine Zeitreferenz für die erste Empfangsstation erzeugt;
    Liefern eines zweiten Photons aus dem Paar über einen zweiten Kommunikationskanal (8) an eine zweite Empfangsstation (5) mit einer zweiten Uhr, beziehungsweise eines Taktgebers (62b), die/der eine Zeitreferenz für die zweite Empfangsstation erzeugt;
    Vergleichen der Polarisation jedes empfangenen Photons an jeder Empfangsstation, mit einer zufällig ausgewählten ersten Referenzbasis oder einer zweiten Referenzbasis; wobei jede Referenzbasis zwei zueinander senkrechte Achsen aufweist, wobei die erste und die zweite Referenzbasis einen Winkelabstand aufweisen, der durch einen gegebenen Winkel definiert ist;
    Erzeugen eines Synchronisationssignals, um die erste Uhr und die zweite Uhr zu aktivieren; und
    Suchen nach Paaren von Zwillingsphotonen, die an den beiden Empfangsstationen (4, 5) zu gleichen Zeitpunkten empfangen wurden, die gemessen wurden, basierend auf Informationen, die von den entsprechenden Uhren geliefert wurden;
    **dadurch gekennzeichnet, dass** der Schritt des Suchens nach Paaren von Zwillingsphotonen, die folgenden Schritte aufweist:

    Messen der Zeitdifferenz $\Delta T$ zwischen dem Akquisitionszeitpunkt $t_n$ von einem Photon und dem Akquisitionszeitpunkt $t_{n-1}$ von dem zuvor empfangenen Photon:

$$\Delta T = t_n - t_{n-1};$$

    Erkennen eines Paares von Zwillingsphotonen wenn der absolute Wert der Differenz zwischen der Zeitdifferenz $\Delta T_a$, gemessen an einer ersten Empfangsstation (4), und der entsprechenden Zeitdifferenz $\Delta T_b$, gemessen an einer zweiten Empfangsstation (5), kleiner ist als ein Koinzidenzzeitfenster:

$$|\Delta T_a - \Delta T_b| < w;$$

    und
    Wiederholen der Mess- und Erkennungsschritte.

**2.** Das Verfahren nach Anspruch 1, wobei die Photonen mit einer Frequenz v von $(\alpha - \beta)/w$ oder höher erzeugt werden, wobei

$\alpha$ und $\beta$ Parameter sind, die berücksichtigen bis zu welchem Ausmaß die Frequenz der ersten/zweiten Uhr von der nominalen Frequenz abweicht, und wobei w das Koinzidenzzeitfenster bezeichnet.

**3.** Das Verfahren nach Anspruch 1, wobei der Schritt des Erzeugens eines Synchronisationssignals die folgenden Schritte aufweist:

Liefern eines optischen Synchronisationsstrahls an die Eingänge des ersten und des zweiten Kommunikationskanals;

Bestimmen des Empfangs des optischen Synchronisationsstrahls an der ersten und zweiten Empfangsstation; und

Synchronisieren der entsprechenden Uhr an jeder Empfangsstation beim Empfang des optischen Synchronisationsstrahls.

**4.** Das Verfahren nach Anspruch 3, wobei der Vergleichsschritt durchgeführt wird durch das Liefern der empfangenen Photonen, mit der gleichen Wahrscheinlichkeit, an ein erstes Paar von Detektoren (50, 51), die mit der ersten Referenzbasis assoziiert sind, oder an ein zweites Paar von Detektoren (53, 54), die mit der zweiten Referenzbasis assoziiert sind; wobei jeder Detektor des Paares mit einer entsprechenden Referenzachse assoziiert ist, die senkrecht zu der anderen Referenzachse ist; wobei jeder Detektor auslöst, wenn das Photon, das von ihm detektiert wird, eine bestimmte Beziehung annimmt; und wobei der Messschritt den Schritt des Bestimmens des Auslösens der beiden Detektoren einer Empfangsstation beim Empfang des optischen Synchronisationsstrahls aufweist.

**5.** Das Verfahren nach Anspruch 1, weist ferner die Schritte des Lieferns eines erkennbaren bekannten zusätzlichen Signals über beide Kommunikationskanäle auf, um die Gesamtfrequenz des Signals, das von der ersten und der zweiten Empfangsstation (4, 5) empfangen wurde, zu erhöhen; und weist ferner das Erkennen und Eliminieren des zusätzlichen Signals an den Empfangsstationen (4, 5) auf.

**6.** Eine Vorrichtung zum Synchronisieren und Akquirieren von Zwillingsphotonen für einen Quantenkryptografieprozess, wobei die Vorrichtung Folgendes aufweist:

eine Photonenquelle (2) zum Erzeugen von Paaren von verschränkten Photonen mit gegensätzlicher Polarisation;

einen ersten Kommunikationskanal (7) zum Übertragen eines ersten Photons aus dem Paar;

einen zweiten Kommunikationskanal (8) zum Übertragen eines zweiten Photons aus dem Paar;

eine erste Empfangsstation (4) zum Empfangen der Photonen von dem ersten Kommunikationskanal (7);

eine zweite Empfangsstation (5) zum Empfangen der Photonen von dem zweiten Kommunikationskanal (8); wobei

die erste und die zweite Empfangsstation entsprechend eine erste und eine zweite Uhr, beziehungsweise einen ersten und einen zweiten Taktgeber (62a, 62b) aufweisen, um entsprechende Zeitreferenzen für die Empfangsstationen zu erzeugen;

wobei jede Empfangsstation Referenzmittel zum Vergleichen der Polarisation jedes empfangenen Photons an jeder Empfangsstation aufweist, mit einer zufällig ausgewählten ersten Referenzbasis oder einer zweiten Referenzbasis; wobei jede Referenzbasis zwei zueinander senkrechte Achsen aufweist, und wobei die erste und die zweite Referenzbasis einen Winkelabstand aufweisen, der durch einen gegebenen Winkel definiert ist;

wobei die erste und die zweite Empfangsstation ein Synchronisationssignal empfängt, um die erste Uhr und die zweite Uhr zu aktivieren; und wobei

jede Empfangsstation Suchmittel zum Suchen nach Paaren von Zwillingsphotonen aufweist, die an den beiden Empfangsstationen (4, 5) zu gleichen Zeitpunkten empfangen wurden, die gemessen wurden, basierend auf Informationen, die von den entsprechenden Uhren geliefert wurden;

**dadurch gekennzeichnet, dass** die Suchmittel Folgendes aufweisen:

Vergleichsmittel (110) zum Messen der Zeitdifferenz $\Delta T$, an jeder Empfangsstation (4, 5), zwischen dem Akquisitionszeitpunkt $t_n$ von einem Photon und dem Akquisitionszeitpunkt $t_{n-1}$ von dem zuvor empfangenen Photon:

$$\Delta T = t_n - t_{n-1};$$

Detektionsmittel (120) zum Erkennen eines Paares von Zwillingsphotonen wenn der absolute Wert der Differenz zwischen der Zeitdifferenz $\Delta T_a$, gemessen an einer ersten Empfangsstation (4), und der entsprechenden Zeitdifferenz $\Delta T_b$, gemessen an einer zweiten Empfangsstation (5), kleiner ist als ein Koinzidenzzeitfenster:

$$| \Delta T_a - \Delta T_b | < w;$$

und
Wiederauswahlmittel (120) zum Wiederauswählen der Vergleichsmittel und der Detektionsmittel und zum Wiederholen der Mess- und Erkennungsoperationen.

**Revendications**

1. Procédé de synchronisation et d'acquisition de photons jumeaux pour un processus de cryptographie quantique, comprenant les étapes suivantes :

   - générer des paires de photons entremêlés, dans lesquelles les photons de chaque paire sont de polarisation opposée;
   - fournir un premier photon de la paire, via un premier canal de communication (7), à une première station réceptrice (4) dotée d'une première horloge (62a) générant une référence de temps pour la première station réceptrice;
   - fournir un second photon de la paire, via un second canal de communication (8), à une seconde station réceptrice (5) dotée d'une seconde horloge (62a) générant une référence de temps pour la seconde station réceptrice;
   - comparer, à chaque station réceptrice, la polarisation de chaque photon reçu avec une première base de référence ou seconde base de référence sélectionnée de manière aléatoire; chaque base de référence comprenant deux axes perpendiculaires, et les première et seconde bases de référence étant espacées angulairement d'un angle donné;
   - générer un signal de synchronisation pour activer la première horloge et la seconde horloge; et
   - rechercher des paires de photons jumeaux reçus aux deux stations réceptrices (4, 5) au même instant mesuré sur la base d'informations fournies par les horloges respectives;
   **caractérisé en ce que** l'étape de recherche de paires de photons jumeaux comprend les étapes suivantes :
   - mesurer, à chaque station réceptrice (4, 5), la différence temporelle $\Delta T$ entre l'instant d'acquisition $t_n$ d'un photon et l'instant d'acquisition $t_{n-1}$ du photon reçu précédemment :

$$\Delta T = t_n - t_{n-1};$$

   - reconnaître une paire de photons jumeaux lorsque la valeur absolue de la différence entre la différence temporelle $\Delta T_a$ mesurée à une première station réceptrice (4) et la différence temporelle $\Delta T_b$ correspondante mesurée à une seconde station réceptrice (5) est inférieure à une fenêtre temporelle de coïncidence : $|\Delta T_a - \Delta T_b| < w$; et
   - répéter les étapes de mesure et de reconnaissance.

2. Procédé selon la revendication 1, dans lequel les photons sont générés à une fréquence v de $(\alpha - \beta)/w$ ou supérieure, où $\alpha$ et $\beta$ sont des paramètres tenant compte de la mesure dans laquelle la fréquence de la première/seconde horloge s'écarte de la fréquence nominale, et w représente la fenêtre temporelle de coïncidence.

3. Procédé selon la revendication 1, dans lequel l'étape consistant à générer un signal de synchronisation comprend les étapes suivantes :

- fournir un faisceau de synchronisation optique aux entrées du premier et second canal de communication;
- déterminer la réception du faisceau de synchronisation optique à la première et seconde station réceptrice; et
- synchroniser l'horloge respective à chaque station réceptrice lors de la réception dudit faisceau de synchronisation optique.

4. Procédé selon la revendication 3, dans lequel ladite étape de comparaison est exécutée en fournissant les photons reçus, avec la même probabilité, à une première paire de détecteurs (50, 51) associée à la première base de référence, ou à une seconde paire de détecteurs (53, 54) associée à la seconde base de référence; chaque détecteur de la paire étant associé à un axe de référence respectif perpendiculaire à l'autre axe de référence; chaque détecteur se déclenchant lorsque le photon qu'il reçoit adopte une relation prédéterminée; et ladite étape de mesure comprenant l'étape qui consiste à déterminer le déclenchement des deux détecteurs d'une station réceptrice lors de la réception dudit faisceau de synchronisation optique.

5. Procédé selon la revendication 1, comprenant les étapes consistant à fournir, via les deux canaux de communication, un signal supplémentaire connu et reconnaissable pour augmenter la fréquence totale du signal reçu par la première et la seconde station réceptrice (4, 5); et à reconnaître et éliminer le signal supplémentaire auxdites stations réceptrices (4, 5).

6. Dispositif de synchronisation et d'acquisition de photons jumeaux pour un processus de cryptographie quantique, comprenant :

- une source de photons (2) pour générer des paires de photons entremêlés de polarisation opposée;
- un premier canal de communication (7) pour transmettre un premier photon de la paire;
- un second canal de communication (8) pour transmettre un second photon de la paire;
- une première station réceptrice (4) pour recevoir les photons du premier canal de communication (7); et une seconde station réceptrice (5) pour recevoir les photons du second canal de communication (8);
ladite première et ladite seconde station réceptrice étant dotées respectivement d'une première et d'une seconde horloge (62a, 62b) pour générer des références temporelles respectives pour les stations réceptrices;
chaque station réceptrice comprenant des moyens de référence pour comparer la polarisation de chaque photon reçu avec une première base de référence ou seconde base de référence sélectionnée de manière aléatoire; chaque base de référence comprenant deux axes perpendiculaires, et la première et la seconde base de référence étant espacées angulairement d'un angle donné;
ladite première et ladite seconde station réceptrice recevant un signal de synchronisation pour activer la première horloge et la seconde horloge;
et chaque station réceptrice étant dotée de moyens de recherche afin de rechercher des paires de photons jumeaux reçus aux deux stations réceptrices (4, 5) au même instant mesuré sur la base d'informations fournies par les horloges respectives;
**caractérisé en ce que** lesdits moyens de recherche comprennent :
- des moyens de comparaison (110) destinés à mesurer, à chaque station réceptrice (4, 5), la différence temporelle $\Delta T$ entre l'instant d'acquisition $t_n$ d'un photon et l'instant d'acquisition $t_{n-1}$ du photon reçu précédemment:

$$\Delta T = t_n - t_{n-1};$$

- des moyens de détection (120) destinés à reconnaître une paire de photons jumeaux lorsque la valeur absolue de la différence entre la différence temporelle $\Delta T_a$ mesurée à une première station réceptrice (4) et la différence temporelle $\Delta T_b$ correspondante mesurée à une seconde station réceptrice (5) est inférieure à une fenêtre temporelle de coïncidence : $|\Delta T_a - \Delta T_b| < w$; et
- des moyens de re-sélection (120) destinés à re-sélectionner lesdits moyens de comparaison et lesdits moyens de détection et à répéter les opérations de mesure et de reconnaissance.

Fig.1

EP 1 730 879 B1

```
┌─────────────────────────────────────────────┐
│ SEND SYNCHRONIZING SIGNAL;              ╲100 │
│                                               │
│ SET LOCAL TIME ORIGIN                         │
│                                               │
│ OF STATIONS                                   │
└─────────────────────────────────────────────┘
```

Fig.2

```
┌─────────────────────────────────────────────┐
│ CALCULATE CURRENT PHOTON TIME ΔTₐ       ╲110 │
│                                               │
│ AND CURRENT PHOTON TIME ΔT_b  WITH RESPECT    │
│                                               │
│ TO CURRENT TIME ORIGIN                        │
└─────────────────────────────────────────────┘
```

120

NO   $| \Delta T_a - \Delta T_b | < w$   YES
?

```
                            ┌──────────────────────────┐
                            │                      130 │
                            │ COINCIDENCE;             │
                            │                          │
                            │ SHIFT TIME ORIGIN OF     │
                            │                          │
                            │ STATIONS TO LOCATED      │
                            │                          │
                            │ COINCIDENCE              │
                            └──────────────────────────┘
```

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BOVINO F A et al.** Demonstration of secure quantum key distribution. *PROCEEDINGS OF THE SPIE - THE INTERNATIONAL SOCIETY FOR OPTICAL ENGINEERING SPIE-INT. SOC. OPT. ENG USA,* 2003, vol. 5105, ISSN 0277-786X, 1-10